# EUROPÄISCHE PATENTSCHRIFT

(11) **EP 2 622 218 B1**
(45) Veröffentlichungstag und Bekanntmachung des Hinweises auf die Patenterteilung: **12.08.2015**
(21) Anmeldenummer: 11761608.6
(22) Anmeldetag: 28.09.2011
(51) Int. Cl.: F03G 7/06

(54) **AKTUATORSYSTEM ZUR ERZEUGUNG VON POSITIONIERBEWEGUNGEN**
ACTUATOR SYSTEM FOR GENERATING POSITIONING MOVEMENTS
SYSTÈME D'ACTIONNEUR PERMETTANT DE GÉNÉRER DES MOUVEMENTS DE POSITIONNEMENT

(30) Priorität: 30.09.2010 DE 102010047040
(43) Veröffentlichungstag der Anmeldung: 07.08.2013
(73) Patentinhaber: FG-Innovation GmbH, 44799 Bochum (DE)
(72) Erfinder: LANGBEIN, Sven, 58708 Menden (DE); CZECHOWICZ, Alexander, 44801 Bochum (DE); MEIER, Horst, 32758 Detmold (DE)
(74) Vertreter: Mammel und Maser
(86) Internationale Anmeldenummer: PCT/EP2011/066843
(87) Internationale Veröffentlichungsnummer: WO 2012/041896

(56) Entgegenhaltungen:
- WO-A1-99/60267
- US-A- 5 396 769
- US-A1- 2005 103 008
- US-A1- 2008 018 198
- US-B1- 6 326 707

## Beschreibung

Die Erfindung ung betrifft einen Aktuatorsystem zur Erzeugung von Positionierbewegungen mittels Formgedächtniselementen gemäß dem Oberbegriff des Anspruchs 1.

Es ist bekannt, dass Formgedächtniselemente zur Erzeugung von Stellbewegunnen dienen, initiiert durch eine Erwärmung und eine damit verbundene cristalline Umwandlung, Damit auch eine Wiederholbarkeit der Stellbewegung gewährleistet werden kann, muss ein Rückstellelement vorgesehen, sein, welches im kalten Zustand das Formgedächtniselement wieder zurückverformt. Die Erwärmung erfolgt dabei durch ein umgebendes Medium oder durch den elektrischen Eigenwiderstand des Formgedächtn selementes. Die Erwärmung mittels Umgebungsmedium regelt zwar das System intern, lässt jedoch keine externe Regelung der Stellbewegung zu. Die Erwärmung durch den elektrischen Eigenwiderstand ist aufgrund der In technischen Anwendungen oft begrenzten Stromstärke bzw. Spannung zwar nur für kleinere Materialquerschnitte geeignet, besitzt aber den Vorteil einer externen Regelbarkeit. Aus der US 4 806 815 ist ein Linearbewegungsaktor bekannt, der ein Formgedächtniselement In Form eines Drahtes enthält, der sich bei Überschreitung der Umwandlungstemperatur zusammenzieht und dabei ein Betätigungsglied in Form eines Stabes nach oben drückt. Bei Abkühlung des Formgedächtnlselementes zieht eine Stahlfeder den Stab wieder in die Ausgangsposition zurück. Das Betätigungsglied führt dazu nur allgemeine Translationsbewegungen aus. In der DE 198 02 639 Al wird weiterhin eine Bewegungseinrichtung mit Formgedächtnisantrieb beschrieben, bei der ein Furmgedächtniselement an einem Betätigungselement durch eine Hülle geführt so angeordnet ist, dass bei einer Kontraktion oder Dehnung des Formgedächtniselementes durch Temperaturänderung eine Stellbewegung des Betätigungselementes ausgelöst wird. Die Rückstellung In den Ausgangszustand erfolgt durch eine Stahlfeder. Derartige Formgedachtnisaktoren besitzen jedoch den Nachteil, dass Positionieraufgaben nur sehr ungenau ausgeführt werden können. Ein Grund dafür ist, dass die elektrisch zugeführte Energie nicht proportional zum Stellweg einstellbar ist, sondern von diversen Einflussfaktoren, wie beispielsweise von der Umgebungstemperatur, abhängt.

Aus der US 2008/0018198 geht ein Aktuatorsystem hervor, welches zur Erzeugung von Positionierbewegungen Formgedächtniselemente umfasst. Dieses Aktuatorsystem nimmt In einem Gehäuse ein Stellelement auf, das in Kopplung mit den Formgedächtnisaktuatoren die Positionierbewegungen ausführt. Die Einzelaktuatoren sind in dem gemeinsamen Gehäuse austauschbar angeordnet und als standardisierte Aktuatoren ausgebildet. Das Stellelement umfasst mindestens zwei Einzelaktuatoren, die aus Formgedächtniselementen bestehen und miteinander gekoppelt sind, so dass bei Überschreiten einer Umwandlungstemperatur eine translatorische Stellbewegung des Stellelementes generiert und der zweite Einzelaktuator bei Bedarf aktiviert wird sowie eine weitere Stellbewegung ausführt.

Aus der GB 2 119 929 A1 ist ein Aktuator bekannt, der ein Federelement aus einer Formgedächtnislegierung umfasst, um ein Stellelement gegenüber einem Gehäuse auszufahren, wobei das Stellelement über Stifte in Schlitzen einer Rohrhalterung, die in das Gehäuse eingesetzt ist, längsgeführt wird.

Aus der US 20003/0079472 A1 geht eine Einstellvorrichtung hervor, welche einen Tisch aufweist, der in X- und Y-Richtung verfahrbar ist. Auf einem Grundkörper ist zunächst eine Führung vorgesehen, um einen Zwischenteller in X-Richtung zu verfahren. Auf diesem Zwischenteller ist eine zweite Führung vorgesehen, um einen weiteren Teller in Y-Richtung zu verfahren. Für die Verfahrbewegung sind zwei in entgegengesetzte Verfahrrichtung ansteuerbare Formgedächtniselemente vorgesehen.

Ausgehend von diesem Stand der Technik liegt der Erfindung die Aufgabe zugrunde, ein Aktuatorsystem zur Erzeugung von Positionierbewegungen mittels Formgedächtniselementen zu schaffen, um unterschiedliche Positionieraufgaben sehr genau ausführen zu können, wobei das Aktuatorsystem durch einen einfachen kompakten Aufbau flexibel und leistungsfähig gestaltet ist und damit sein Einsatzpotential vergrößert wird.

Zur Lösung dieser Aufgabe schlägt die Erfindung ein in einem Gehäuse angeordnetes und mindestens zwei Einzelaktuatoren umfassendes modular ausgebildetes Aktuatorsystem vor, wobei das Aktuatorsystem eine Positionierbewegung eines Stellelementes erzeugt und das Stellelement mit mindestens zwei Einzelaktuatoren, die aus Formgedächtniselementen bestehen, gekoppelt ist, derart, dass der erste Einzelaktuator bei Überschreiten einer Umwandlungstemperatur eine translatorische oder rotatorische Stellbewegung des Stellelementes und der zweite seriell geschaltete Einzelaktuator bei Bedarf aktiviert wird und eine weitere Stellbewegung ausführt, so dass entweder eine weitere Stellposition des Stellelementes anfahrbar oder die erste Stellposition feiner einstellbar ist. Dabei ist das Stellelement als ein eine Positionierbewegung ausführender Schlitten ausgebildet, wobei der Schlitten durch zwei Im Gehäuse angeordnete Führungssäulen so geführt Ist, dass er eine Translationsbewegung in zwei Richtungen ausführt. Weiterhin sind die Einze aktuatoren im gemeinsamen Gehäuse nach Bedarf austauschbar vorgesehen und als standardisierte Aktuatoren ausgebildet, wobei die Einze aktuatoren sowohl gleiche als auch verschiedene Stellwege ausführen. Die Einzelaktuatoren weisen mindestens eine zweistufige Bewegungscharakteristik auf, damit die Anzahl möglicher Stellpositionen weiter erhöht wird.

Zur Vergrößerung des Stellbereiches des Aktuatorsystems sind weitere Einzelaktuatoren nachschaltbar, so dass entsprechend der Anzahl seriell nachgeschalteter Einzelaktoren beliebig viele Stellpositionen angefahren werden können.

Eine vorteilhafte Ausführungsform des Aktuatorsystems wird darin gesehen, dass die Formgedächtniselemente als Draht, Blechstreifen oder als Federn ausgebildet sind..

Vorteilhaft weisen die Einzelaktuatoren standardisierte mechanische, elektrisch e und Informationstechnische Schnittstellen auf. Zusätzlich ist vorgesehen, dass mittels eines zentral Im Aktuatorsystem oder dezentral in den Einzelaktuatoren integrierten Rastmechanismus eine Endposition des Stellelementes stromlos haltbar vorgesehen ist.

Des Weiteren Ist vorteilhaft vorgesehen, die Rückstellung des Aktuatorsystems entweder zentral durch mindestens ein an dem Stellelement angeordretes Rückstellelement oder dezentral durch an den Betätigungselementen der Einzelaktuatoren angeordnete Rückstellelemente erfolgt, die vorzugsweise als Stahlfedern, Kunststofffedern oder pseudoelastische, Formgedächtniselemente ausgebildet sind.

Die Erfindung wird nachfolgend anhand eines In einer Zeichnung schematisch dargestellten Ausführungsbeispiels näher erläutert. Es zeigt:

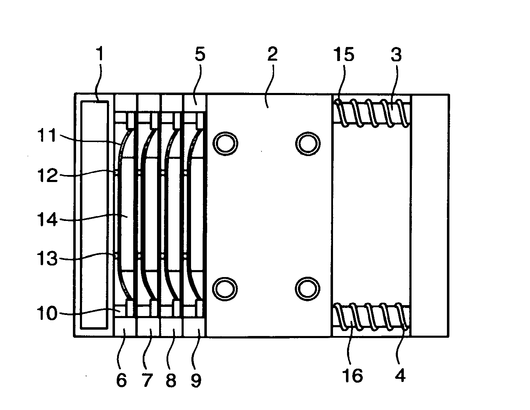

- Figur 1: ein Ausführungsbeispiel eines Aktuatorsystems mit vier Einzelaktuatoren.

In Figur ist ein erfindungsgemäßes modular ausgebildetes Aktuator-system dargestellt. In einem Gehäuse 1 ist ein Schlitten 2 durch zwei Führungssäulen 3, 4 so längsgeführt, dass der Schlitten 2 eine Translatlonsbewegung in zwei Richtungen ausführt. Der Schlitten 2 wird durch ein Aktuatormodul 5 mit Formgedächtniselementen bewegt, wobei der Aktuatormodul 5 aus mindestens zwei, im dargestellten Ausführungsbeispiel aus vier zusammengeschalteten Einzelaktuatoren 6, 7, 8, 9 besteht. Die Einzelaktuatoren 6, 7, 8, 9 bestehen vorzugsweise aus einem Gehäuse 10, in dem Formgedächtniselemente 11 angeordnet sind, welche mit zwei Betätigungselementen 12, 13 gekoppelt sind, die in dem im Gehäuse 10 des Einzelaktuators 6, 7, 8, 9 angeordneten Führungselement 14 ängsgeführt sind. Die Betätigungselemente 12, 13 leiten die Stellbewegung des entsprechenden Formgedächtniselementes 11 an die weiteren angekoppelten Einzelaktuatoren 6, 7, 8, 9 und der letzte Einzelaktuator 9 an den Schlitten 2 weiter. Durch das Zusammenschalten mehrerer Einzelaktuatoren 6, 7, 8, 9 können unterschiedliche Stellpositionen des Schlittens 2 durch unterschiedliches Aktivleren der Einzelaktuatoren 5, 7, 8, 9 realisiert bzw. eine definierte Stellbewegung erzielt werden. Die Rückstellung des Schlittens 2 erfolgt durch zwei auf den Führungssäulen 3, 4 angeordnete als Rücksteilfedern 15, 16 ausgebildete Rückstellelemente, die den Schlitten 2 bei Abschaltung der Einzelaktuatoren 5, 7, 8, 9 in den Ausgangszustand zurückstellen.

## Patentansprüche

1. Aktuatorsystem zur Erzeugung von Positionierbewegungen mittels Formgedächtniselementen (11), umfassend ein in einem Gehäuse (1) angeordnetes Stellelement (2), das in Kopplung mit Formgedächtnisaktuatoren Positionierbewegungen ausführt, und ein in dem Gehäuse (1) mindestens zwei Einzelaktuatoren (6, 7) umfassendes, modular ausgebildetes Aktuatorsystem (5), das eine Positionierbewegung eines Stellelementes (2) erzeugt, wobei die Einzelaktuatoren (6, 7, 8, 9) mindestens ein Formgedächtniselement (11) und mindestens ein Betätigungselement (12, 13) aufweisen und die Einzelaktuatoren (6, 7, 8, 9) im gemeinsamen Gehäuse (1) austauschbar angeordnet und als standardisierte Aktuatoren ausgebildet sind, und das Stellelement (2) mit mindestens zwei Einzelaktuatoren (6, 7), die aus Formgedächtniselementen (11) bestehen, gekoppelt ist, derart, dass der erste Einzelaktuator (6) bei Überschreiten einer Umwandlungstemperatur eine translatorische Stellbewegung des Stellelementes (2) generiert und der zweite Einzelaktuator (7) bei Bedarf aktiviert wird und eine weitere Stellbewegung ausführt, so dass entweder eine weitere Steilposition des Stellelementes (2) anfahrbar oder die erste Stellposition feiner einstellbar ist, **dadurch gekennzeichnet,**
- **dass** das Stellelement (2) als ein eine Positionierbewegung ausführender Schlitten ausgebildet ist, wobei der Schlitten (2) durch zwei im Gehäuse (1) angeordnete Führungssäulen (3, 4) so geführt ist, dass er eine Translationsbewegung in zwei Richtungen ausführt,
- **dass** das zumindest eine Betätigungselement (12, 13) in einem Gehäuse (10) des Einzelaktuators (6, 7, 8, 9) längsgeführt ist, und
- **dass** die Einzelaktuatoren (6, 7, 8, 9) mindestens eine zweistufige Bewegungscharakteristik aufweisen.

2. Aktuatorsystems nach Anspruch 1, **dadurch gekennzeichnet, dass** zur Vergrößerung des Stellberelches des Aktuatorsystems (5) weitere Einzelaktuatoren nachschaltbar sind.

3. Aktuatorsystem nach einem der vorangehenden Ansprüche, dadunch gekennzeichnet, dass die Formgedächtniselemente (11) als Draht, Blechstreifen oder als Federn ausgebildet sind.

4. Aktuatorsystem nach einem der Ansprüche 1 bis 3, **dadurch gekennzeichnet, dass** die Einzelaktuatoren (6, 7, 8, 9) sowohl gleiche als such verschiedene Stellwege aufweisen.

5. Aktuatorsystem nach einem der Ansprüche 1 bis 4, **dadurch gekennzeichnet, dass** die Einzelaktuatoren (6, 7, 8, 9) standardisierte mechanische, elektrische und informationstechnische Schnittstellen aufweisen.

6. Aktuatorsystem nach einem der Ansprüche 1 bis 5, **dadurch gekennzeichnet, dass** die Rückstellung des Aktuatorsystems (5) entweder zentral durch mindestens ein an dem Stellelement (2) angeordnetes Rockstellelement (15, 16) oder dezentral durch an den Betatigungselementen (12, 13) der Einzelaktuatoren (6, 7, 8, 9) angeordnete Rückstellelemente erfolgt.

7. Aktuatorsystem nach Anspruch 6, **dadurch gekennzeichnet, dass** die Rückstellelemente als Stahlfedern (15, 16), Kunststofffedern oder pseudoelastische Formgedächtniselemente ausgebildet sind.

8. Aktuatorsystem nach einem der Ansprüche 1 bis 7, **dadurch gekennzeichnet, dass** mittels eines zentral im Aktuatorsystem (5) oder dezentral in den Einzelaktuatoren (6, 7, 8, 9) integrierten Rastmechanismus eine Endposition des Stellelementes (2) stromlos haltbar vorgesehen ist.

## Claims

1. An actuator system for generating positioning movements by means of shape memory elements (11), comprising an actuation member (2) disposed in a housing (1) and coupled to shape memory actuators to perform positioning movements, and a modular actuator system (5) that comprises at least two individual actuators (6, 7) and generates a positioning movement of an actuation member (2), with the individual actuators (6, 7, 8, 9) having at least one shape memory element (11) and at least one activation element (12, 13), and with the individual actuators (6, 7, 8, 9) being exchangeably arranged in the common housing (1) and realised as standardised actuators, and with the actuation member (2) being coupled to at least two individual actuators (6, 7) consisting of shape memory elements (11), such that when a transformation temperature is exceeded, the first individual actuator (6) generates a translational actuating movement of the actuation member (2) and, if required, the second individual actuator (7) is activated and performs a further actuating movement, thus making it possible for the actuation member (2) to move on to another actuation position or to fine adjust its first actuation position, **characterised in that**
- the actuation member (2) is realised as a carriage performing a positioning movement, with the carriage (2) being guided by two guide columns (3, 4) arranged within the housing (1) in such a manner that it may perform a translational movement in two directions,
- the at least one activation element (12, 13) is longitudinally guided within a housing (10) of the individual actuator (6, 7, 8, 9), and
- the individual actuators (6, 7, 8, 9) have at least a two-step motion characteristics.

2. The actuator system as claimed in claim 1, **characterised in that** further individual actuators may be added so as to enlarge the range of actuation of the actuator system (5).

3. The actuator system as claimed in any of the preceding claims, **characterised in that** the shape memory elements (11) are realised in the form of wire, metal strips, or springs.

4. The actuator system as claimed in any one of claims 1 to 3, **characterised in that** the individual actuators (6, 7, 8, 9) have both identical and different actuating travel paths.

5. The actuator system as claimed in any one of claims 1 to 4, **characterised in that** the individual actuators (6, 7, 8, 9) have standardised mechanical, electrical, and information technology interfaces.

6. The actuator system as claimed in any one of claims 1 to 5, **characterised in that** the actuator system (5) is restored to its initial state either centrally via at least one return element (15, 16) disposed on the actuation member (2) or locally via return elements disposed on the activation elements (12, 13) of the individual actuators (6, 7, 8, 9).

7. The actuator system as claimed in claim 6, **characterised in that** the return elements are realised in the form of steel springs (15, 16), plastic springs or pseudoelastic shape memory elements.

8. The actuator system as claimed in any one of claims 1 to 7, **characterised in that** by means of a locking mechanism that may be integrated centrally into the actuator system (5) or locally into the individual actuators (6, 7, 8, 9), provision is made for the actuation member (2) to be capable of being maintained in an end position without current.

## Revendications

1. Système actionneur destiné à générer des mouvements de positionnement au moyen d'éléments à mémoire de forme (11), comprenant un élément de réglage (2) qui est disposé dans un boîtier (1) et exécute, en association avec des actionneurs à mémoire de forme, des mouvements de positionnement, et un système actionneur (5) réalisé sous forme de module et comprenant, dans le boîtier (1), au moins deux actionneurs individuels (6, 7) lequel génère un mouvement de positionnement d'un élément de réglage (2), les actionneurs individuels (6, 7, 8, 9) présentant au moins un élément à mémoire de forme (11) et au moins un élément d'actionnement (12, 13) et les actionneurs individuels (6, 7, 8, 9) étant disposés de manière échangeable dans le boîtier commun (1) et étant réalisés sous forme d'actionneurs standard, et l'élément de réglage (2) étant couplé à au moins deux actionneurs individuels (6, 7) composés d'éléments à mémoire de forme (11) de telle sorte que le premier actionneur individuel (6) génère, lors du dépassement d'une température de transformation donnée, un mouvement de réglage translatoire de l'élément de réglage (2) et que le deuxième actionneur individuel (7) est, le cas échéant, activé et effectue un autre mouvement de réglage de sorte qu'une autre position de réglage de l'élément de réglage (2) peut être occupée ou que la première position de réglage peut être réglée avec plus de précision, **caractérisé en ce que**
- l'élément de réglage (2) est réalisé sous la forme d'un chariot exécutant un mouvement de positionnement, le chariot (2) étant guidé par deux colonnes de guidage (3, 4) disposées dans le boîtier (1) de telle sorte qu'il exécute un mouvement de translation dans deux directions,
- ledit au moins un élément d'actionnement (12, 13) est guidé longitudinalement dans un boîtier (10) de l'actionneur individuel (6, 7, 8, 9), et
- les actionneurs individuels (6, 7, 8, 9) présentent au moins une caractéristique de mouvement à deux positions.

2. Système actionneur selon la revendication 1, **caractérisé en ce que** d'autres actionneurs individuels peuvent être montés en aval pour augmenter la gamme de réglage du système actionneur (5).

3. Système actionneur selon l'une quelconque des revendications précédentes, **caractérisé en ce que** les éléments à mémoire de forme (11) sont réalisés sous forme de fil métallique, de bandes de tôle ou de ressorts.

4. Système actionneur selon l'une quelconque des revendications 1 à 3, **caractérisé en ce que** les actionneurs individuels (6, 7, 8, 9) présentent des courses de réglage aussi bien identiques que différentes.

5. Système actionneur selon l'une quelconque des revendications 1 à 4, **caractérisé en ce que** les actionneurs individuels (6, 7, 8, 9) présentent des interfaces standard mécaniques, électriques et informatiques.

6. Système actionneur selon l'une quelconque des revendications 1 à 5, **caractérisé en ce que** la remise à l'état initial du système actionneur (5) est effectuée soit de manière centrale par au moins un élément de rappel (15, 16) disposé sur l'élément de réglage (2), soit de manière non centrale par des éléments de rappel disposés sur les éléments d'actionnement (12, 13) des actionneurs individuels (6, 7, 8, 9).

7. Système actionneur selon la revendication 6, **caractérisé en ce que** les éléments de rappel sont réalisés sous forme de ressorts en acier (15, 16), de ressorts en matière plastique ou d'éléments à mémoire de forme pseudoélastiques.

8. Système actionneur selon l'une quelconque des revendications 1 à 7, **caractérisé en ce qu'**il est prévu qu'une position finale de l'élément de réglage. (2) puisse être maintenue sans courant au moyen d'un mécanisme d'enclenchement intégré de manière centrale dans le système actionneur (5) ou de manière non centrale dans les actionneurs individuels (6, 7, 8, 9).
